(19) Europäisches Patentamt / European Patent Office / Office européen des brevets

(11) **EP 3 629 631 B1**

(12) **EUROPEAN PATENT SPECIFICATION**

(45) Date of publication and mention of the grant of the patent:
**14.04.2021 Bulletin 2021/15**

(21) Application number: **18818174.7**

(22) Date of filing: **31.05.2018**

(51) Int Cl.:
*H04B 7/0452* (2017.01)     *H04L 5/00* (2006.01)
*H04B 7/024* (2017.01)     *H04W 4/06* (2009.01)

(86) International application number:
**PCT/CN2018/089372**

(87) International publication number:
**WO 2018/228213 (20.12.2018 Gazette 2018/51)**

(54) **METHOD AND DEVICE FOR DETERMINING BROADCAST INFORMATION**

VERFAHREN UND VORRICHTUNG ZUR BESTIMMUNG VON RUNDFUNKINFORMATIONEN

PROCÉDÉ ET DISPOSITIF PERMETTANT DE DÉTERMINER DES INFORMATIONS DE DIFFUSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.06.2017 CN 201710459817**

(43) Date of publication of application:
**01.04.2020 Bulletin 2020/14**

(73) Proprietor: **Huawei Technologies Co., Ltd.**
**Longgang District**
**Shenzhen, Guangdong 518129 (CN)**

(72) Inventors:
- **WANG, Jianguo**
  **Shenzhen**
  **Guangdong 518129 (CN)**
- **LIU, Jianqin**
  **Shenzhen**
  **Guangdong 518129 (CN)**
- **ZHANG, Xu**
  **Shenzhen**
  **Guangdong 518129 (CN)**

(74) Representative: **Epping - Hermann - Fischer**
**Patentanwaltsgesellschaft mbH**
**Schloßschmidstraße 5**
**80639 München (DE)**

(56) References cited:
**WO-A1-2017/069510     WO-A2-2014/072814**

CN-A- 104 969 608     CN-A- 107 734 596
US-A1- 2015 085 737     US-A1- 2017 006 578
US-A1- 2017 288 831

- LG ELECTRONICS: "Discussion on beam coordination and QCL for NR", 3GPP DRAFT; R1-1609256 NR_QCL_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Lisbon, Portugal; 20161010 - 20161014 1 October 2016 (2016-10-01), XP051159368, Retrieved from the Internet: URL:http://www.3gpp.org/ftp/tsg_ran/WG1_RL 1/TSGR1_86b/Docs/ [retrieved on 2016-10-01]
- NOKIA ET AL: "NR-PBCH Design", 3GPP DRAFT; R1-1612807, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, U.S.A.; 20161114 - 20161118 4 November 2016 (2016-11-04), XP051189483, Retrieved from the Internet: URL:http://www.3gpp.org/ftp/tsg_ran/WG1_RL 1/TSGR1_87/Docs/ [retrieved on 2016-11-04]
- Nokia; Alcatel-Lucent Shanghai Bell: "NR-PBCH design", 3GPP TSG RAN Meeting #87 R1-1612807, no. R1-1612807, 13 November 2016 (2016-11-13), XP051189483, Reno, USA
- NTT Docomo; Inc.: "Discussion on broadcast signal/channel design for NR", 3GPP TSG RAN Meeting #87 R1-1612722, no. R1-1612722, 5 November 2016 (2016-11-05), XP051190538, Reno, USA

**Description**

**TECHNICAL FIELD**

This application relates to the field of wireless communications technologies, and in particular, to a method for determining broadcast information and a device.

**BACKGROUND**

In a fourth generation wireless access system, namely, a long term evolution (Long Term Evolution, LTE) system, carriers are widely deployed in low frequency bands below 6 GHz. According to distribution of a divided frequency spectrum, a carrier frequency band of a fifth generation wireless access system is much higher than a carrier frequency band of the fourth generation wireless access system. For example, a candidate carrier frequency band includes 30 GHz, 60 GHz and the like.

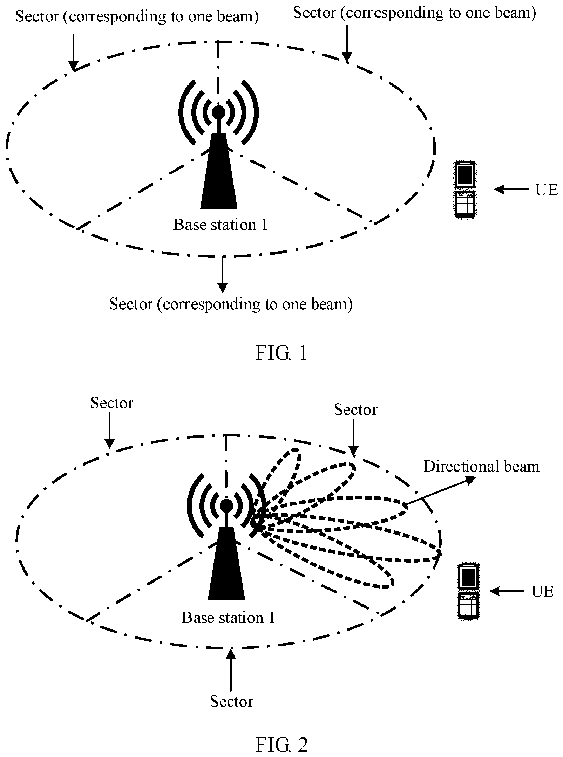

Currently, as shown in FIG. 1, in the fourth generation wireless access system, a broadcast channel is generally sent by using one beam in each sector, where the broadcast channel carries broadcast information and a reference signal. In a scenario shown in FIG. 1, a terminal device can receive only one broadcast channel in each sector. After receiving the broadcast channel in each sector, the terminal device obtains the broadcast information and the reference signal carried in the broadcast channel. Then, the terminal device demodulates the broadcast information by using the reference signal, to obtain demodulated broadcast information. Finally, the demodulated broadcast information is used to access a wireless access system, and the terminal device may communicate with a base station.

In the wireless access system, a higher frequency band of a carrier indicates larger fading in free space and more limited coverage. To resolve a problem of coverage limitation, in the fifth generation wireless access system, as shown in FIG 2, related technical personnel propose a solution that a plurality of high-gain directional beams are used in each sector together to send broadcast channels. In this case, in a scenario shown in FIG 2, a terminal device may receive a plurality of broadcast channels in each sector. In this case, the terminal device needs to determine whether broadcast information carried in different broadcast channels is the same, and performs further processing depending on whether the broadcast information is the same. In the prior art, there is no solution on how a terminal device determines whether broadcast information carried in a plurality of broadcast channels received in one sector is the same. For example, a base station sends broadcast channels in one sector by using three directional beams. Correspondingly, the terminal device may receive three broadcast channels in the sector. However, there is no solution on how the terminal device determines whether the broadcast information carried in the three broadcast channels is the same.

US 2015/085737 A1 discloses an apparatus and method for receiving data by a first transceiver. The method includes receiving information for at least one transmission mode through higher layer signaling from a second transceiver; and receiving data on a first sub-frame based on a first demodulation reference signal (DMRS), if the at least one transmission mode is transmission mode 9 or transmission mode 10 and the first sub-frame is a multimedia broadcast multicast service single frequency network (MBSFN) sub-frame.

WO 2014/072814 A2 discloses a method for a serving base station of CoMP transmission including sending a message to a cooperating base station of the Co MP transmission to indicate desired Non-Zero-Power Channel Status Information Reference Signal (NZP CSI RS) resources and/or Zero-Power Channel Status Information Reference Signal (ZP CSI RS) resources. The method meets new needs and facilitates CoMP transmission.

Nokia; Alcatel-Lucent Shanghai Bell, "NR-PBCH design", 3GPP TSG RAN Meeting #87 R1-1612807, Reno, USA, no. R1-1612807 discloses methods relating to NR-PBCH design. A NR cell may operate using single-beam and multi-beam configuration. Further, the cell may comprise one or multiple TRPs each of which may be capable of forming one or multiple beams at a time. Single-beam operation refers to configuration where TRP uses sector wide beam for SS block transmission and multi-beam operation refers to configuration where TRP uses narrow beams for SS block transmissions.

**SUMMARY**

This application provides a method for determining broadcast information and a device, to determine whether broadcast information included in a plurality of broadcast channels is the same. The invention is defined by the appended claims. In the following, parts of the description and drawings referring to embodiments which are not covered by the claims are not presented as embodiments of the invention, but as examples useful for understanding the invention.

According to a first aspect, this application provides a method for determining broadcast information. The method includes: receiving, by user equipment, at least two broadcast channels, where each broadcast channel includes a reference signal and broadcast information; and determining, by the user equipment based on the reference signals of each of the two broadcast channels, whether broadcast information included in the two broadcast channels is the same.

It can be learned that, in this application, whether two pieces of broadcast information are the same may be determined based on the reference signals. A processing process is simplified, thereby reducing power consumption of a terminal device. In addition, if two broadcast signals are the same, the broadcast signals may be further processed, for example, a combination is performed on two same broadcast signals, so that performance of processing the broadcast signals by the terminal user can be improved, and performance of accessing the network by the user equipment is optimized.

In a possible design, the broadcast information includes configuration information of a control channel resource.

In a possible design, cell identities used by the at least two broadcast channels are the same.

In a possible design, the determining, by the user equipment based on the reference signals of each of the two broadcast channels, whether broadcast information included in the two broadcast channels is the same includes: determining, by the user equipment based on the reference signal sequences of the two broadcast channels, whether the broadcast information included in the two broadcast channels is the same.

In this application, the reference signal sequences may be directly used to determine whether the broadcast signals are the same. The implementation is easy and power consumption of the user equipment is reduced. For example, when the reference signals of the two broadcast channels are the same, it is determined that the broadcast signals included in the two broadcast channels are the same. When the reference signals of the two broadcast channels are different, it is determined that broadcast signals included in the two broadcast channels are different.

In a possible design, the determining, by the user equipment based on the reference signals of each of the two broadcast channels, whether broadcast information included in the two broadcast channels is the same includes: determining, by the user equipment based on initial values of reference signal sequences of the two broadcast channels, whether the broadcast information included in the two broadcast channels is the same.

In a possible design, the determining, by the user equipment based on the reference signals of each of the two broadcast channels, whether broadcast information included in the two broadcast channels is the same includes: determining, by the user equipment based on identities IDs for initial values of reference signal sequences of the two broadcast channels, whether the broadcast information included in the two broadcast channels is the same.

In a possible design, the determining, by the user equipment based on the reference signals of each of the two broadcast channels, whether broadcast information included in the two broadcast channels is the same includes: determining, by the user equipment based on cyclic shift values of reference signal sequences of the two broadcast channels, whether the broadcast information included in the two broadcast channels is the same.

In a possible design, the determining, by the user equipment based on the reference signals of each of the two broadcast channels, whether broadcast information included in the two broadcast channels is the same includes: determining, by the user equipment based on masks or orthogonal cover codes OCCs used by reference signal sequences of the two broadcast channels, whether the broadcast information included in the two broadcast channels is the same.

In a possible design, the determining, by the user equipment based on the reference signals of each of the two broadcast channels, whether broadcast information included in the two broadcast channels is the same includes: determining, by the user equipment based on virtual identities used by reference signal sequences of the two broadcast channels, whether the broadcast information included in the two broadcast channels is the same.

In a possible design, the reference signal of the broadcast channel further carries quasi co-location QCL information, where the QCL information indicate that the reference signal of the broadcast channel and a demodulation reference signal of at least one control channel in the control channel resource are QCL.

In a possible design, the method according to the first aspect further includes: detecting, by the user equipment, at least two candidate control channels based on the broadcast information of the broadcast channel, where QCL information of the at least two candidate control channels is different.

According to a second aspect, this application further provides a method for determining broadcast information. The method includes: determining, by a network device, at least two broadcast channels, where each broadcast channel includes a reference signal and broadcast information, and the reference signals indicate whether broadcast information included in the at least two broadcast channels is the same; and sending, by the network device, the at least two broadcast channels.

In a possible design, the broadcast information includes configuration information of a control channel resource.

In a possible design, cell identities used by the at least two broadcast channels are the same.

In a possible design, the reference signals each include a reference signal sequence, and the reference signal sequences indicate whether the broadcast information included in the two broadcast channels is the same.

In a possible design, the reference signals each include a reference signal sequence, and initial values of the reference signal sequences indicate whether the broadcast information included in the two broadcast channels is the same.

In a possible design, the reference signals each include a reference signal sequence, and identities IDs for initial values of the reference signal sequences indicate whether the broadcast information included in the two broadcast channels is the same.

In a possible design, the reference signals each include a reference signal sequence, and cyclic shift values of the reference signal sequences indicate whether the broadcast information included in the two broadcast channels is the same.

In a possible design, the reference signals each include a reference signal sequence, and masks or orthogonal cover codes OCCs used by the reference signal sequences indicate whether the broadcast information included in the two broadcast channels is the same.

In a possible design, the reference signals each include a reference signal sequence, and virtual identities used by the reference signal sequences indicate whether the broadcast information included in the two broadcast channels is the same.

In a possible design, the reference signal of the broadcast channel further carries quasi co-location QCL information, where the QCL information indicate that the reference signal of the broadcast channel and a demodulation reference signal of at least one control channel in the control channel resource are QCL.

In a possible design, the method further includes: configuring, by the network device, at least two candidate control channels based on the broadcast information of the broadcast channel, where QCL information of the at least two candidate control channels is different.

According to a third aspect, this application further provides user equipment, including: a terminal device having a function of implementing behaviors of the terminal device in the foregoing method example of the first aspect. The function may be implemented by hardware, or may be implemented by hardware by executing corresponding software. The hardware or the software includes one or more modules corresponding to the function.

In a possible design, a structure of the terminal device includes a processing unit and a receiving unit. The units may execute corresponding functions in the foregoing method example. For details, refer to detailed descriptions in the method example, and details are not described herein. According to a fourth aspect, this application further provides a terminal device. The terminal device has a function of implementing behaviors of the terminal device in the foregoing method example of the first aspect. The function may be implemented by hardware. A structure of the terminal device includes a communication module, a processor, a bus, a display panel, and a memory. The processor, the display panel, and the memory are connected by using the bus. The display panel is configured to display an image, the processor invokes an instruction stored in the memory, to perform the foregoing method, and the communication module is configured to send a multimedia file.

In a possible design, the communication module may be an RF circuit, a WiFi module, a communications interface, a Bluetooth module, and the like.

According to a fifth aspect, an embodiment of this application further provides a terminal device. The terminal device has a function of implementing behaviors of the terminal device in the method examples of the foregoing two aspects. The function may be implemented by hardware, or may be implemented by hardware by executing corresponding software. The hardware or the software includes one or more modules corresponding to the function.

In a possible design, a structure of the terminal device includes a processing unit and a sending unit. The units may execute corresponding functions in the foregoing method example. For details, refer to detailed descriptions in the method example, and details are not described herein. According to a sixth aspect, this application further provides a terminal device. The terminal device has a function of implementing behaviors of the terminal device in the method example of the second aspect. The function may be implemented by hardware. A structure of the terminal device includes a processor, a bus, and a transceiver. The processor and the transceiver are connected by using the bus.

In a possible design, the processor is configured to determine at least two broadcast channels, and the transceiver is configured to send at least two pieces of broadcast information.

According to a seventh aspect, an embodiment of this application further provides a computer storage medium. The storage medium stores a software program. When being read and executed by one or more processors, the software program may implement the method according to any one of the first aspect or the designs of the first aspect.

According to an eighth aspect, an embodiment of this application further provides a computer storage medium. The storage medium stores a software program. When being read and executed by one or more processors, the software program may implement the method according to any one of the second aspect or the designs of the second aspect.

According to a ninth aspect, an embodiment of this application provides a computer program. The computer program includes a computer instruction. When the computer instruction is executed on a computer, the computer performs the method according to the first aspect or the second aspect.

According to a tenth aspect, an embodiment of this application further provides a communications system. The communications system includes the terminal device according to the first aspect and the network device according to the second aspect.

Therefore, in this application, the network device may first generate at least two broadcast channels, and sends the at least two broadcast channels to the terminal device. The broadcast channels include the reference signals and the broadcast information, and the reference signals may be used to represent whether the broadcast information included in the at least two broadcast channels is the same. After receiving the broadcast channels, the terminal device may determine, based on the reference signals of the broadcast channels, whether the broadcast information included in the two broadcast channels is the same. Based on the method and the device in this application, whether the broadcast information included in the at least two broadcast channels is the same can be determined.

## BRIEF DESCRIPTION OF DRAWINGS

FIG. 1 is a schematic diagram of sending a broadcast channel by a base station in a fourth generation wireless access system according to this application;

FIG. 2 is a schematic diagram of sending a broadcast channel by a base station in a fifth generation wireless access system according to this application;

FIG. 3 is a schematic flowchart of a method for determining broadcast information and a device according to this application;

FIG. 4 is a schematic structural diagram of a base station according to this application; and

FIG. 5 is a schematic structural diagram of a terminal device according to this application.

## DESCRIPTION OF EMBODIMENTS

For ease of understanding, a description of concepts related to this application is provided as follows for reference by using an example.

A base station (base station, BS) device, which may also be referred to as a base station, is an apparatus that is deployed in a radio access network to provide a wireless communication function. For example, in a 2G network, a device providing a base station function includes a base transceiver station (base transceiver station, BTS) and a base station controller (base station controller, BSC). In a 3G network, a device providing a base station function includes a NodeB (English: NodeB) and a radio network controller (radio network controller, RNC). In a 4G network, a device providing a base station function includes an evolved NodeB (evolved NodeB, eNB). In WLAN, a device providing a base station function is an access point (access point, AP). In a future 5G network, such as new radio (New Radio, NR), or LTE+, a device providing a base station function includes a next generation NodeB (gNB), a TRP (transmission and reception point, TRP), or a TP (transmission point, TP). The TRP or the TP may not include a baseband part, but include only a radio frequency part, or may include both a baseband part and a radio frequency part.

User equipment (user equipment, UE) is a terminal device, and may be a mobile terminal device, or may be an immobile terminal device. The device is mainly configured to receive or send service data. The user equipment may be distributed in a network. The user equipment has different names in different networks, such as a terminal, a mobile console, a subscriber unit, a station, a cellular phone, a personal digital assistant, a wireless modem, a wireless communications device, a handheld device, a laptop computer, a cordless telephone set, and a wireless local loop station, and a vehicle-mounted device. The user equipment may communicate with one or more core networks through a radio access network (radio access network, RAN) (an access part of a wireless communications network), for example, exchange voice and/or data with the radio access network.

A network side device is a device located on a network side in a wireless communications network, and may be an access network element, such as a base station or a controller (if any), or may be a core network element, or may be another network element.

A beam may be understood as a spatial resource, and may be a transmit or receive precoding vector having an energy transmission direction. In addition, the transmit or receive precoding vector can be identified by using index information. The energy transmission direction may refer to that energy of a sent signal is aggregated in a spatial location by precoding processing, and the signal on which the precoding processing is performed by using the precoding vector is received, where the signal has better receive power, for example, satisfies a receive demodulation signal-to-noise ratio. The energy transmission direction may also refer to that same signals sent from different spatial locations are received by using the precoding vector, where the same signals have different receive power. Optionally, a same communications device (such as a terminal device or a network device) may have different precoding vectors, and different devices may also have different precoding vectors, that is, corresponding to different beams. For a configuration or capability of a communications device, one communications device may use one or more precoding vectors of a plurality of different precoding vectors at a same time, that is, one or more beams may be formed at the same time. Beam information may be identified by using index information. Optionally, the index information may correspond to a configured resource identity (identity, ID) of UE. For example, the index information may correspond to a configured ID or a resource of a channel state information-reference signal (Channel status information Reference Signal, CSI-RS), or may also correspond to a configured ID or a resource of an uplink sounding reference signal (Sounding Reference Signal, SRS). Alternatively, optionally, the index information may also be index information explicitly or implicitly carried by a signal or a channel carried on a beam. For example, the index information includes but not limited to index information that is of a beam and that is indicated by a synchronization signal or a broadcast channel sent by using the beam. A beam pair may include a transmit beam (Tx beam) of a transmit end and a receive beam (Rx beam) of a receive end, or may also be referred to as an uplink beam or a downlink beam. For example, the beam pair may include a gNB Tx beam transmission beam or a UE Rx beam receive beam, or an UE Tx beam transmission beam or a gNB Rx beam receive beam, where the transmission beam may also be understood as a transmit beam.

The following describes the technical solutions in this application with reference to the accompanying drawings.

FIG. 2 is a schematic diagram of a possible system network of this application. As shown in FIG. 2, in a fifth generation wireless access system, a used frequency band of a carrier is relatively high, for example, 30 GHZ and 60 GHZ. To resolve a problem of coverage limitation, related technical personnel propose a solution that a plurality of high-gain directional beams are used in one sector to send broadcast channels. In this solution, the user equipment may receive a plurality of broadcast channels in one sector. In this case, the user equipment needs to determine whether broadcast information in the received plurality of broadcast channels is the same, and process the broadcast information depending on whether the broadcast information is the same, for example, combining a plurality of pieces of same broadcast information. In this application, two methods for combining same broadcast information are specifically provided. One method is chase-combining. Specifically, when a plurality of pieces of the same broadcast information is demodulated and decoded, maximum likelihood detection is performed on demodulation signals that are at a same location, and finally specific content of the broadcast information is determined. The other method is to perform joint decoding on a plurality of pieces of same broadcast information. In one implementation, soft demodulation of a plurality of broadcast channels is combined, and combined soft demodulation data is used for decoding. The combination method is not limited to the foregoing implementation, and other signal combination methods having a same effect are within the protection scope. For example, a base station uses three beams to send broadcast channels in one sector. Correspondingly, the user equipment may also receive three broadcast channels in one sector. If broadcast information corresponding to the three broadcast channels is the same, the user equipment may combine the broadcast information included in the three broadcast channels, thereby improving performance of processing the broadcast information by the user equipment.

Based on this, this application provides a method for determining broadcast information. A principle of the method is as follows: Improvement is performed on reference signals on a base station side, so that the reference signals of broadcast channels may represent whether broadcast signals are the same. Then, the user equipment may determine, based on the reference signals of the broadcast channels, whether the broadcast signals included in a plurality of broadcast channels are the same.

Some scenarios in this application are described by using a 4G or 5G network scenario in a wireless communications network as an example. It should be noted that solutions of this application may also be applied to another wireless communications network, and a corresponding name may also be replaced with a corresponding function name in the another wireless communications network.

It should be noted that the method or an apparatus in this application may be applied between a wireless network device and user equipment, or may be applied between a wireless network device and a wireless network device (for example, a macro base station and a micro base station), or may be applied between user equipment and user equipment (for example, a D2D scenario). In this application, communication between the user equipment and the wireless network device is used as an example for description.

It should also be noted that the technical solutions of this application may be applied to various communications systems, for example, a wireless fidelity (wifi) system, a worldwide interoperability for microwave access (Worldwide Interoperability for Microwave Access, WiMAX) system, a global system for mobile communication (Global System of Mobile communication, GSM) system, a code division multiple access (Code Division Multiple Access, CDMA) system, a wideband code division multiple access (Wideband Code Division Multiple Access, WCDMA) system, and a general packet radio service (General Packet Radio Service, GPRS) system, a long term evolution (Long Term Evolution, LTE) system, an advanced long term evolution (Advanced long term evolution, LTE-A) system, a universal mobile telecommunications system (Universal Mobile Telecommunications System, UMTS), a cellular system related to the 3rd generation partnership project (The 3rd Generation Partnership Project, 3GPP), and the like, and a 5th generation (Fifth Generation, 5G) mobile communication system. This is not limited in the embodiments of the present invention.

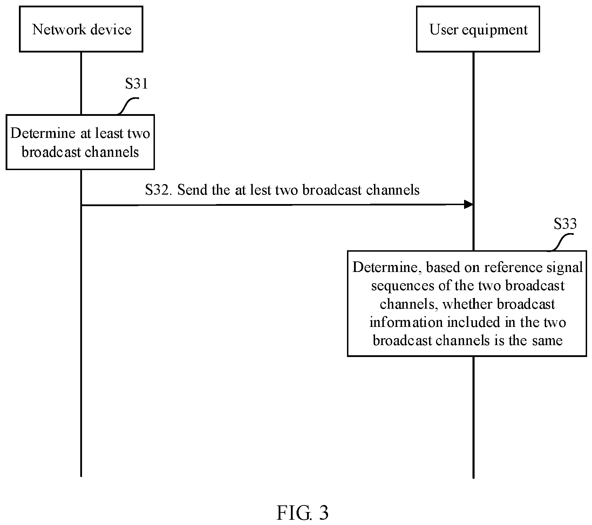

FIG. 3 is a process of a method for determining broadcast information according to this application. A network device in the process may correspond to the base station in FIG. 2, and user equipment may correspond to the UE in FIG. 2. As shown in FIG. 3, the method includes the following steps.

Step S31: The network device determines at least two broadcast channels, where each broadcast channel includes a reference signal and broadcast information, and the reference signals indicate whether broadcast information included in the at least two broadcast channels is the same.

In this application, the broadcast information includes configuration information of a control channel resource. The configuration information of the control channel resource in the broadcast information included in each broadcast channel may be the same or may be different.

The reference signal of the broadcast channel includes a reference signal occupying a same OFDM symbol with the broadcast channel and/or a synchronization signal corresponding to the broadcast channel.

A reference signal sequence in the following context indicates a reference signal sequence of a reference signal occupying a same OFDM symbol with a broadcast channel and a synchronization signal sequence of a synchronization signal corresponding to the broadcast channel.

Step S32: The network device sends the at least two broadcast channels.

In this application, the network device may specifically send broadcast channels on a plurality of directional beams of one sector. For example, if one sector includes three directional beams, the network device may send three broadcast channels by using the three directional beams. For another example, specifically, one broadcast channel may separately be sent on each directional beam. Cell identities used by the at least two broadcast channels are the same.

Step S33: The user equipment determines, based on the reference signals of each of the two broadcast channels, whether the broadcast information included in the two broadcast channels is the same.

In this application, the reference signals each include a reference signal sequence, and the reference signal sequence carries indication information. The indication information may be used to indicate whether the broadcast information included in the two broadcast channels is the same. Correspondingly, in this application, the user equipment may determine, based on the reference signal sequences of the two broadcast channels, whether the broadcast information included in the two broadcast channels is the same. For example, when the reference signals of the two broadcast channels are the same, it may be determined that the broadcast information included in the two broadcast channels is the same. When the reference signals of the two broadcast channels are different, it may be determined that the broadcast information included in the two broadcast channels is different.

Alternatively, when the reference signal sequences of the two broadcast channels are different, it is determined that the broadcast information included in the two broadcast channels is the same. When the reference signal sequences of two the broadcast channels are the same, it is determined that the broadcast information included in the two broadcast channels is different.

The reference signal sequence may be a pseudo-random sequence, for example, a pseudo-random sequence $r(m)$ may be generated based on Formula (1).

$$r(m) = \frac{1}{\sqrt{2}}\left(1 - 2 \cdot c(2m)\right) + j\frac{1}{\sqrt{2}}\left(1 - 2 \cdot c(2m+1)\right), \qquad m = 0,1,...,4N_{\mathrm{RB}}^{\mathrm{max,DL}} - 1 \qquad (1)$$

where

$c(n) = (x_1(n + N_C) + x_2 (n + N_C))\mathrm{mod}2$
$x_1(n +31) = (x_1(n+3) + x_1(n))\mathrm{mod}2$
$x_2(n+31) = (x_2(n+3)+x_2(n+2)+x_2(n+1)+x_2(n))\mathrm{mod}2$

$x_1(0) = 1, x_1(n) = 0, n = 1,2,...,30$, $N_{\mathrm{RB}}^{\mathrm{max,DL}}$ represents a maximum quantity of downlink PRBs $c_{\mathrm{init}} = \sum_{i=0}^{30} x_2(i) \cdot 2^i$, and $N_c$ is a constant, for example, $N_c = 1600$. $c_{\mathrm{init}}$ represents an initial value of a reference signal (which may be obtained in one of manners of higher layer signaling configuration, synchronization or broadcast signal configuration, or predefinition, and the like), or may be derived by using an identity of a terminal device and/or a virtual identity.

In addition, the reference signal sequence may also be a Zadoff-Chu sequence, a ZC sequence for short, or an m sequence or a sequence in another format. This is not specifically limited.

In this application, the reference signals each may include a reference signal sequence. Initial values of the reference signal sequences may be used to indicate whether the broadcast information included in the two broadcast channels is the same. Correspondingly, in this application, the user equipment may determine, based on the initial values of the reference signal sequences of the two broadcast channels, whether the broadcast information included in the two broadcast channels is the same. For example, when the initial values of the reference signal sequences of the two broadcast channels are the same, it may be determined that the broadcast information included in the two broadcast channels is the same. When the initial values of the reference signal sequences of the two broadcast channels are different, it may be determined that the broadcast information included in the two broadcast channels is different.

Alternatively, when the initial values of the reference signal sequences of the two broadcast channels are different, it is determined that the broadcast information included in the two broadcast channels is the same. When the initial values of the reference signal sequences of the two broadcast channels are the same, it is determined that the broadcast information included in the two broadcast channels is different.

In this application, the reference signals each include a reference signal sequence. Identities IDs for initial values of the reference signal sequences may be used to indicate whether the broadcast information included in the two broadcast channels is the same. Correspondingly, in this application, the user equipment may determine, based on the identities IDs for the initial values of the reference signal sequences of the two broadcast channels, whether the broadcast information included in the two broadcast channels is the same. For example, when the identities IDs for the initial values of the reference signal sequences of the two broadcast channels are the same, it may be determined that the broadcast information included in the two broadcast channels is the same. When the identities IDs for the initial values of the reference signal sequences of the two broadcast channels are different, it is determined that the broadcast information included in the two broadcast channels is different.

Alternatively, when identities IDs for the initial values of the reference signal sequences of the two broadcast channels are different, it is determined that the broadcast information included in the two broadcast channels is the same. When the identities IDs for the initial values of the reference signal sequences of the two broadcast channels are the same, it is determined that the broadcast information included in the two broadcast channels is different.

In this application, the reference signals each include a reference signal sequence. Cyclic shift values of the reference signal sequences may be used to indicate whether the broadcast information included in the two broadcast channels is the same. Correspondingly, in this application, the user equipment may determine, based on the cyclic shift values of the reference signal sequences of the two broadcast channels, whether the broadcast information included in the two broadcast channels is the same. For example, when the cyclic shift values of the reference signal sequences of the two broadcast channels are the same, it may be determined that the broadcast information included in the two broadcast channels is the same. When the cyclic shift values of the reference signal sequences of the two broadcast channels are different, it may be determined that the broadcast information included in the two broadcast channels is different. Alternatively, when the cyclic shift values of the reference signal sequences of the two broadcast channels are different, it is determined that the broadcast information included in the two broadcast channels is the same. When the cyclic shift values of the reference signal sequences of the two broadcast channels are the same, it is determined that the broadcast information included in the two the broadcast channels is different.

In this application, the reference signals each include a reference signal sequence, and masks or orthogonal cover codes OCCs used by the reference signal sequences may be used to indicate whether the broadcast information included in the two broadcast channels is the same. Correspondingly, in this application, the user equipment may determine, based on the masks (Mask) or orthogonal cover codes (Orthogonal Cover Code, OCC) used by the reference signal sequences of the two broadcast channels, whether the broadcast information included in the two broadcast channels is the same. For example, when the masks used by the reference signal sequences of the two broadcast channels are the same, it may be determined that the broadcast information included in the two broadcast channels is the same. For another example, when the orthogonal cover codes OCCs used by the reference signal sequences of the two broadcast channels are the same, it may be determined that the broadcast information included in the two broadcast channels is the same. When the orthogonal cover codes OCCs used by the reference signal sequences of the two broadcast channels are different, it may be determined that the broadcast information included in the two broadcast channels is different.

Alternatively, when the masks or OCCs of the reference signal sequences of the two broadcast channels are different, it is determined that the broadcast information included in the two broadcast channels is the same. When the masks or OCCs of the reference signal sequences of the two broadcast channels are the same, it is determined that the broadcast information included in the two broadcast channels is different.

In this application, the reference signals each include a reference signal sequence. Virtual identities used by the reference signal sequences may be used to indicate whether the broadcast information included in the two broadcast channels is the same. Correspondingly, in this application, the user equipment may determine, based on the virtual identities used by the reference signal sequences of the two broadcast channels, whether the broadcast information included in the two broadcast channels is the same. For example, when the virtual identities used by the reference signal sequences of the two broadcast channels are the same, it may be determined that the broadcast information included in the two broadcast channels is the same. When the virtual identities used by the reference signal sequences of the two broadcast channels are different, it may be determined that the broadcast information included in the two broadcast channels is different.

Alternatively, when the virtual identities used by the reference signal sequences of the two broadcast channels are different, it is determined that the broadcast information included in the two broadcast channels is the same. When the virtual identities used by the reference signal sequences of the two broadcast channels are the same, it is determined that the broadcast information included in the two broadcast channels is different.

In another feasible embodiment of this application, the reference signal of the broadcast channel further carries quasi co-location (Quasi Co-Located, QCL) information. The QCL information indicate that the reference signal of the broadcast channel and a demodulation reference signal of at least one control channel in the control channel resource are QCL. Herein, the reference signal of the broadcast channel may include a synchronization signal or a dedicated demodulation reference signal of the broadcast channel. Optionally, the QCL information may be further used to indicate that a reference signal other than the reference signal of the broadcast channel and a demodulation reference signal of at least one control channel in the control channel resource are QCL.

The two QCL reference signals or two QCL reference signals resources may have same values of QCL parameters. The QCL parameters are shown in Table 1. The QCL information includes indication information indicating a QCL type of the reference signal, and/or indicates whether the two reference signals are QCL.

Specifically, the foregoing QCL reference signals may belong to at least one of three QCL types in Table 1. However, this is not limited in the embodiments of this application. Alternatively, the foregoing QCL reference signals may include another QCL type. That the two reference signals are QCL indicates that QCL parameters of two reference signals are the same in terms of a reference signal of a control channel and a reference signal of a broadcast channel. As shown in Table 1, the QCL parameters include at least one of a channel average gain (type 1), a channel large-scale feature (type 2), namely, {average delay, delay extension, Doppler shift, Doppler frequency spread spectrum, and the like}, or a channel spatial parameter (type 3). For example, a QCL type of the foregoing reference signal of the control channel and the reference signal of broadcast channel belongs to the type 3, and channel spatial features of the foregoing reference signal of the control channel and the reference signal of the broadcast channel are the same.

**Table 1**

| QCL parameter set type | QCL parameter | Reference signal or reference signal resource pair | Application scenario |
|---|---|---|---|
| Type 1 | Average gain | Between demodulation reference signal ports in a single carrier; and between channel measurement reference signal ports on a resource | Radio resource management |
| Type 2 | { Average delay, delay extension, Doppler shift, Doppler frequency spectrum} | One or more demodulation reference signal DMRS ports and one CSI-RS resource are QCL; and a CSI-RS resource and a time/frequency tracking reference signal are QCL, and any other two types of reference signals are QCL, such as a DMRS and an SSS. | Demodulation (frequency /time offset estimation) |
| Type 3 | { Space parameter}, for example, a power angle spread, or, an angle spread of a signal arrival angle and/or a signal departure angle | Different CSI-RS resources are QCL; a DMRS resource and a CSI-RS resource are QCL; a phase tracking reference signal and a DMRS port group are QCL, and any other two types of reference signals are QCL, such as a DMRS and an SSS. | Reducing beam management signaling |

Optionally, the quasi co-location information may be carried in a reference signal sequence of a broadcast channel. Reference signal sequences of reference signals of the two broadcast channels are the same, and a reference signal of a candidate control channel included in a control channel resource set indicated by the broadcast information and a reference signal of the broadcast channel are QCL.

The network device may further configure at least two candidate control channels based on broadcast information of broadcast channels, where QCL information of the at least two candidate control channels is different. User equipment may detect the at least two candidate control channels based on the broadcast information of the broadcast channels. The QCL information of the at least two candidate control channels is different.

The two broadcast channels include a first broadcast channel and a second broadcast channel. The first broadcast channel has a first offset in time domain relative to a frame header, and the second broadcast channel has a second offset in time domain relative to a frame header. A first candidate control channel that is QCL with the first broadcast channel is determined based on a first offset value, and a second candidate control channel that is QCL with the second broadcast channel is determined based on a second offset value. Physical resources mapped by the first candidate control channel and the second candidate control channel are different.

It should be further noted that in this application, after receiving the broadcast channel and obtaining the broadcast information in the broadcast channel, the user equipment may receive a control channel at a corresponding resource location based on resource configuration information of the control channel in the broadcast information, and then access a network based on control information transmitted on the control channel. However, in this application, the obtained broadcast channel is more accurate by combining broadcast channels, thereby accelerating the user equipment accessing the network. Alternatively, in some scenarios, for example, in a scenario in which a channel between the user equipment and the network device experiences shadow fading because the user equipment is blocked by an obstacle, the user equipment generally fails to access a system by using one piece of broadcast information. In this application, the same broadcast information is combined, so that the user equipment can successfully access the system in the foregoing scenario.

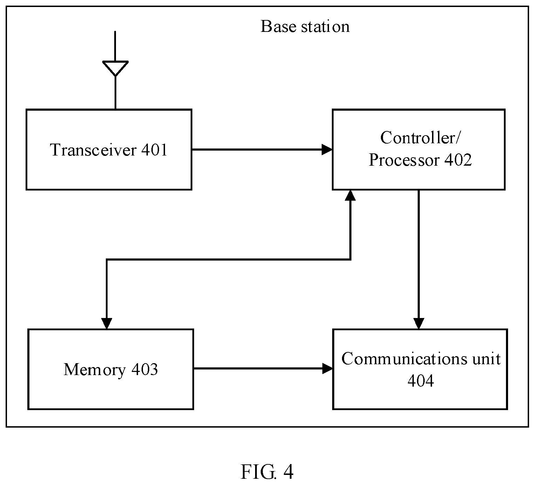

FIG. 4 shows a possible schematic structural diagram of a base station used in the foregoing embodiment of this application. The base station may be the base station in FIG. 1 or FIG. 2, or the network device in FIG 3.

In this application, the base station includes a transceiver 401 and a controller/processor 402. The transceiver 401 may be configured to support receiving and sending information between the base station and the user equipment in the foregoing embodiment, and support wireless communication between the base station and a core network device.

The controller/processor 402 is configured to perform various functions used for communicating with a terminal device and the core network device. In uplink, an uplink signal from the user equipment is received by an antenna, demodulated by the transceiver 401, and further processed by the controller/processor 402, to reconstruct service data and signaling information that are sent by the user equipment. In downlink, service data and the signaling message are processed by the controller/processor 402 and demodulated by the transceiver 401 to generate a downlink signal, and the downlink signal is transmitted to the UE by using an antenna. The controller/processor 402 is further configured to perform the method for determining broadcast information described in the foregoing embodiment, to generate at least two broadcast channels, and send the at least two broadcast channels to the user equipment. The controller/processor 402 is further configured to perform a processing process of the network device in FIG. 3 and/or another process of technologies described in this application. The base station may further include a memory 403 that may be configured to store program code and data of the base station. The base station may further include a communications unit 404, configured to support communication between the base station and another network entity, for example, support communication between the base station and the core network device.

It may be understood that FIG. 4 shows only a simplified design of a base station. In actual application, the base station may include any quantity of transmitters, receivers, processors, controllers, memories, communications units, and the like, and all base stations that can implement this application fall within the protection scope of this application.

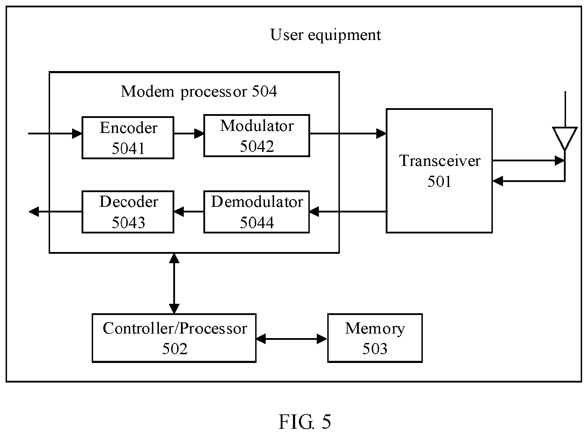

FIG. 5 shows a possible simplified schematic diagram of a design structure of user equipment used in the foregoing embodiment of this application. The user equipment may be the UE in FIG. 1 or FIG. 2, or the user equipment in FIG. 3. The user equipment includes a transceiver 501 and a controller/processor 502, and may further include a memory 503 and a modem processor 504.

The transceiver 501 performs adjustment (for example, analog-conversion, filtering, amplification, and up-conversion) on output sampling and generates an uplink signal. The uplink signal is transmitted to the base station in the foregoing embodiment by using an antenna. In downlink, the antenna receives the downlink signal transmitted by the base station in the foregoing embodiment. The transceiver 501 performs adjustment (for example, filtering, amplification, down-conversion, and digitization) on a signal received from the antenna and provides input sampling. In the modem processor 504, an encoder 5041 receives service data and a signaling message that are to be sent in uplink, and performs processing (for example, formatting, coding, and interleaving) on the service data and the signaling message. A modulator 5042 further performs processing (for example, symbol mapping and modulation) on encoded service data and an encoded signaling message and provides output sampling. The decoder 5043 performs processing (for example, de-interleaving and decoding) on the symbol estimation and provides the decoded data and the signaling message that are sent to the user equipment. A demodulator 5044 performs processing (for example, demodulation) on the input sampling and provides symbol estimation. The encoder 5041, the modulator 5042, the decoder 5043, and the demodulator 5044 may be implemented by the combined modem processor 504. These units perform processing based on a wireless technology (such as an access technology in LTE or another evolved system) used in a radio access network.

The controller/processor 502 controls and manages an action of the user equipment and is configured to perform processing implemented by the user equipment in the foregoing embodiments. The user equipment may receive at least two broadcast channels, and determine, based on reference signals of the broadcast channels, whether broadcast information included in the two broadcast channels is the same. In an example, the controller/processor 502 may be configured to support the user equipment in performing operations of the user equipment in FIG. 3. The memory 503 is configured to store program code and data of the user equipment.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of any other programmable data processing device to generate a machine, so that the instructions executed by a computer or a processor of any other programmable data processing device generate an apparatus for implementing a specified function in one or more procedures in the flowcharts and/or in one or more blocks in the block diagrams.

These computer program instructions may alternatively be stored in a computer readable memory that can instruct the computer or another programmable data processing device to work in a specific manner, so that the instructions stored in the computer readable memory generate an artifact that includes an instruction apparatus. The instruction apparatus implements a specified function in one or more procedures in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specified function in one or more procedures in the flowcharts and/or in one or more blocks in the block diagrams.

Obviously, a person skilled in the art can make various modifications and variations to this application without departing from the scope of this application. This application is intended to cover these modifications and variations of this application provided that they fall within the scope defined by the following claims.

## Claims

1. A method for determining broadcast information, comprising:

   receiving (S32), by user equipment, at least two broadcast channels sent by a network device, wherein each broadcast channel comprises a reference signal and broadcast information, wherein the broadcast information comprises configuration information of a control channel resource, wherein the reference signal of the broadcast channel further carries quasi co-location, QCL information, and the QCL information indicate that the reference signal of the broadcast channel and a demodulation reference signal of at least one control channel in the control channel resource are quasi co-located; and
   determining, by the user equipment based on the reference signals of each of the two broadcast channels, whether broadcast information comprised in the two broadcast channels is the same.

2. The method according to claim 1, wherein cell identities used by the at least two broadcast channels are the same.

3. The method according to any one of claims 1 to 2, wherein the determining, by the user equipment based on the reference signals of each of the two broadcast channels, whether broadcast information comprised in the two broadcast channels is the same comprises:
   determining (S33), by the user equipment based on the reference signal sequences of the two broadcast channels, whether the broadcast information comprised in the two broadcast channels is the same.

4. The method according to claim 1, wherein the method further comprises:
   detecting, by the user equipment, at least two candidate control channels based on the broadcast information of the broadcast channel, wherein QCL information of the at least two candidate control channels is different.

5. A method for determining broadcast information, comprising:

   determining (S31), by a network device, at least two broadcast channels, wherein each broadcast channel comprises a reference signal and broadcast information, wherein the broadcast information comprises configuration information of a control channel resource, wherein the reference signal of the broadcast channel further carries quasi co-location, QCL information, and the QCL information indicates that the reference signal of the broadcast channel and a demodulation reference signal of at least one control channel in the control channel resource are quasi co-located, and the reference signals indicate whether broadcast information comprised in the at least two broadcast channels is the same; and

sending (S32), by the network device, the at least two broadcast channels.

6. The method according to claim 5, wherein cell identities used by the at least two broadcast channels are the same.

7. The method according to any one of claims 5 to 6, wherein the reference signals each comprise a reference signal sequence, and the reference signal sequences indicate whether the broadcast information comprised in the two broadcast channels is the same.

8. The method according to claim 5, wherein the method further comprises: configuring, by the network device, at least two candidate control channels based on the broadcast information of the broadcast channel, wherein QCL information of the at least two candidate control channels is different.

9. An apparatus being configured to perform the method according to any of claims 1 to 4, or an apparatus configured to perform the method according to any of claims 5 to 8.

10. A computer program storing instructions, wherein when the instructions are executed by a user equipment, causes the user equipment to implement the method according to any of claims 1 to 4 or a computer program storing instructions, wherein when the instructions are executed by a network device, causes the network device to implement the method according to any of claims 5 to 8.

11. A communications system comprising user equipment and a network device, wherein the user equipment is being configured to perform the method according to any of claims 1 to 4, and the network device is being configured to perform the method according to any of claims 5 to 8.

**Patentansprüche**

1. Verfahren zum Bestimmen von Broadcast-Informationen, das Folgendes umfasst:

   Empfangen (S32), durch eine Benutzereinrichtung, von wenigstens zwei Broadcast-Kanälen, die durch eine Netzwerkvorrichtung gesendet werden, wobei jeder Broadcast-Kanal ein Bezugssignal und Broadcast-Informationen umfasst, wobei die Broadcast-Informationen Konfigurationsinformationen einer Steuerkanalressource umfassen, wobei das Bezugssignal des Broadcast-Kanals ferner Quasi-Co-Location(QCL)-Informationen trägt, und wobei die QCL-Informationen anzeigen, dass sich das Bezugssignal des Broadcast-Kanals und ein Demodulationsbezugssignal wenigstens eines Steuerkanals in der Steuerkanalressource in Quasi-Co-Location befinden; und
   Bestimmen, durch die Benutzereinrichtung, basierend auf den Bezugssignalen jedes der zwei Broadcast-Kanäle, ob Broadcast-Informationen, die in den zwei Broadcast-Kanälen enthalten sind, dieselben sind.

2. Verfahren nach Anspruch 1, wobei Zellenkennungen, die durch die wenigstens zwei Broadcast-Kanäle verwendet werden, dieselben sind.

3. Verfahren nach einem der Ansprüche 1 bis 2, wobei das Bestimmen, durch die Benutzereinrichtung, basierend auf den Bezugssignalen jedes der zwei Broadcast-Kanäle, ob die Broadcast-Informationen, die in den zwei Broadcast-Kanälen enthalten sind, dieselben sind, Folgendes umfasst:
   Bestimmen (S33), durch die Benutzereinrichtung, basierend auf den Bezugssignalfolgen der zwei Broadcast-Kanäle, ob die Broadcast-Informationen, die in den zwei Broadcast-Kanälen enthalten sind, dieselben sind.

4. Verfahren nach Anspruch 1, wobei das Verfahren ferner Folgendes umfasst:
   Erfassen, durch die Benutzereinrichtung, von wenigstens zwei Kandidatensteuerkanälen basierend auf den Broadcast-Informationen des Broadcast-Kanals, wobei die QCL-Informationen der wenigstens zwei Kandidatensteuerkanäle unterschiedlich sind.

5. Verfahren zum Bestimmen von Broadcast-Informationen, das Folgendes umfasst:

   Bestimmen (S31), durch eine Netzwerkvorrichtung, von wenigstens zwei Broadcast-Kanälen, wobei jeder Broadcast-Kanal ein Bezugssignal und Broadcast-Informationen umfasst, wobei die Broadcast-Informationen Konfigurationsinformationen einer Steuerkanalressource umfassen, wobei das Bezugssignal des Broadcast-Kanals ferner Quasi-Co-Location(QCL)-Informationen umfasst, und wobei die QCL-Informationen anzeigen, dass sich das Bezugssignal des Broadcast-Kanals und ein Demodulationsbezugssignal wenigstens eines Steuerkanals in der Steuerkanalressource in Quasi-Co-Location befinden, und die Bezugssignale anzeigen, ob Broadcast-Informationen, die in den wenigstens zwei Broadcast-Kanälen enthalten sind, dieselben sind; und Senden (S32), durch die Netzwerkvorrichtung, der wenigstens zwei Broadcast-Kanäle.

6. Verfahren nach Anspruch 5, wobei Zellenkennungen, die durch die wenigstens zwei Broadcast-Kanäle verwendet werden, dieselben sind.

7. Verfahren nach einem der Ansprüche 5 bis 6, wobei die Bezugssignale jeweils eine Bezugssignalfolge umfassen und wobei die Bezugssignalfolgen anzeigen, ob die Broadcast-Informationen, die in den zwei Broadcast-Kanälen enthalten sind, dieselben sind.

8. Verfahren nach Anspruch 5, wobei das Verfahren ferner Folgendes umfasst:
Konfigurieren, durch die Netzwerkvorrichtung, von wenigstens zwei Kandidatensteuerkanälen basierend auf den Broadcast-Informationen des Broadcast-Kanals, wobei die QCL-Informationen der wenigstens zwei Kandidatensteuerkanäle unterschiedlich sind.

9. Einheit, die konfiguriert ist, um das Verfahren nach einem der Ansprüche 1 bis 4 durchzuführen, oder Einheit, die konfiguriert ist, um das Verfahren nach einem der Ansprüche 5 bis 8 durchzuführen.

10. Computerprogramm, das Anweisungen speichert, wobei, wenn die Anweisungen durch eine Benutzereinrichtung ausgeführt werden, die Benutzereinrichtung veranlasst wird, das Verfahren nach einem der Ansprüche 1 bis 4 zu implementieren, oder Computerprogramm, das Anweisungen speichert, wobei, wenn die Anweisungen durch eine Netzwerkvorrichtung ausgeführt werden, die Netzwerkvorrichtung veranlasst wird, das Verfahren nach einem der Ansprüche 5 bis 8 zu implementieren.

11. Kommunikationssystem, das die Benutzereinrichtung und eine Netzwerkvorrichtung umfasst, wobei die Benutzereinrichtung konfiguriert ist, um das Verfahren nach einem der Ansprüche 1 bis 4 durchzuführen, und wobei die Netzwerkvorrichtung konfiguriert ist, um das Verfahren nach einem der Ansprüche 5 bis 8 durchzuführen.


**Revendications**

1. Procédé de détermination d'informations de diffusion, comprenant :

la réception (S32), par un équipement utilisateur, d'au moins deux canaux de diffusion envoyés par un dispositif réseau, chaque canal de diffusion comprenant un signal de référence et des informations de diffusion, les informations de diffusion comprenant des informations de configuration d'une ressource de canal de commande, le signal de référence du canal de diffusion transportant en outre des informations de quasi-colocalisation, QCL, et les informations QCL indiquant que le signal de référence du canal de diffusion et un signal de référence de démodulation d'au moins un canal de commande dans la ressource de canal de commande sont quasi-colocalisés ; et
la détermination, par l'équipement utilisateur sur la base des signaux de référence de chacun des deux canaux de diffusion, à savoir si les informations de diffusion comprises dans les deux canaux de diffusion sont les mêmes.

2. Procédé selon la revendication 1, les identités de cellules utilisées par les au moins deux canaux de diffusion étant les mêmes.

3. Procédé selon l'une quelconque des revendications 1 à 2, la détermination, par l'équipement utilisateur sur la base des signaux de référence de chacun des deux canaux de diffusion, à savoir si les informations de diffusion comprises dans les deux canaux de diffusion sont les mêmes comprenant :
la détermination (S33), par l'équipement utilisateur sur la base des séquences de signaux de référence des deux canaux de diffusion, à savoir si les informations de diffusion comprises dans les deux canaux de diffusion sont les mêmes.

4. Procédé selon la revendication 1, le procédé comprenant en outre :
la détection, par l'équipement utilisateur, d'au moins deux canaux de commande candidats sur la base des informations de diffusion du canal de diffusion, les informations QCL des au moins deux canaux de commande candidats étant différentes.

5. Procédé de détermination d'informations de diffusion, comprenant :

la détermination (S31), par un dispositif de réseau, d'au moins deux canaux de diffusion, chaque canal de diffusion comprenant un signal de référence et des informations de diffusion, les informations de diffusion comprenant des informations de configuration d'une ressource de canal de commande, le signal de référence du canal de diffusion transportant en outre des informations de quasi-colocalisation, QCL, et les informations de QCL indiquant que le signal de référence du canal de diffusion et un signal de référence de démodulation d'au moins un canal de commande dans la ressource de canal de commande sont quasi-colocalisés, et les signaux de référence indiquant si les informations de diffusion comprises dans les au moins deux canaux de diffusion sont les mêmes ; et
l'envoi (S32), par le dispositif réseau, des au moins deux canaux de diffusion.

6. Procédé selon la revendication 5, les identités de cellules utilisées par les au moins deux canaux de diffusion étant les mêmes.

7. Procédé selon l'une quelconque des revendications 5 à 6, les signaux de référence comprenant chacun une séquence de signaux de référence, et les séquences de signaux de référence indiquant si les informations de diffusion comprises dans les deux canaux de diffusion sont les mêmes.

8. Procédé selon la revendication 5, le procédé comprenant en outre :
la configuration, par le dispositif de réseau, d'au moins deux canaux de commande candidats sur la base des informations de diffusion du canal de diffusion, les informations QCL des au moins deux canaux de commande candidats étant différentes.

9. Appareil étant configuré pour effectuer le procédé selon l'une quelconque des revendications 1 à 4 ou le procédé selon l'une quelconque des revendications 5 à 8.

10. Programme informatique stockant des instructions, lorsque les instructions sont exécutées par un équipement utilisateur, amenant l'équipement utilisateur à mettre en oeuvre le procédé selon l'une quelconque des revendications 1 à 4 ou un programme informatique stockant des instructions, lorsque les instructions sont exécutées par un dispositif réseau, amenant le dispositif réseau à mettre en œuvre le procédé selon l'une quelconque des revendications 5 à 8.

11. Système de communication comprenant un équipement utilisateur et un dispositif réseau, l'équipement utilisateur étant configuré pour exécuter le procédé selon l'une quelconque des revendications 1 à 4, et le dispositif réseau étant configuré pour exécuter le procédé selon l'une quelconque des revendications 5 à 8.

Sector (corresponding to one beam)　　　Sector (corresponding to one beam)

UE

Base station 1

Sector (corresponding to one beam)

FIG. 1

Sector　　　　　Sector

Directional beam

UE

Base station 1

Sector

FIG. 2

```
┌──────────────────┐                              ┌──────────────────┐
│  Network device  │                              │  User equipment  │
└──────────────────┘                              └──────────────────┘
         │                                                 │
         │   S31                                           │
         │   ⌐                                             │
┌──────────────────┐                                       │
│ Determine at least two │                                 │
│   broadcast channels   │                                 │
└──────────────────┘                                       │
         │   S32. Send the at lest two broadcast channels  │
         │ ───────────────────────────────────────────────►│
         │                                                 │   S33
         │                                        ┌────────────────────────┐
         │                                        │ Determine, based on reference signal │
         │                                        │ sequences of the two broadcast       │
         │                                        │ channels, whether broadcast          │
         │                                        │ information included in the two      │
         │                                        │ broadcast channels is the same       │
         │                                        └────────────────────────┘
         │                                                 │
         │                                                 │
```

FIG. 3

Base station

Transceiver 401

Controller/
Processor 402

Memory 403

Communications unit
404

FIG. 4

FIG. 5

**EP 3 629 631 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015085737 A1

- WO 2014072814 A2

**Non-patent literature cited in the description**

- **NOKIA ; ALCATEL-LUCENT SHANGHAI BELL.** NR-PBCH design. *3GPP TSG RAN Meeting #87 R1-1612807*